# EUROPEAN PATENT SPECIFICATION

(11) **EP 3 289 163 B1**
(45) Date of publication and mention of the grant of the patent: **02.06.2021**
(21) Application number: 16787048.4
(22) Date of filing: 27.04.2016
(51) Int. Cl.: G01V 1/155, G01V 1/52, B06B 1/18

(54) **DOWNHOLE INERTIAL MASS SYSTEM**
BOHRLOCHTRÄGHEITSMASSENSYSTEM
SYSTÈME À MASSE D'INERTIE DE FOND DE TROU

(30) Priority: 29.04.2015 US 201562154438 P
(43) Date of publication of application: 07.03.2018
(73) Proprietor: ConocoPhillips Company, Houston, Texas 77079 (US)
(72) Inventor: EICK, Peter, Houston, Texas 77094 (US); BREWER, Joel, Houston, Texas 77094 (US)
(74) Representative: Simpson, Paul Christopher
(86) International application number: PCT/US2016/029521
(87) International publication number: WO 2016/176303

(56) References cited:
- US-A- 2 784 796
- US-A- 4 207 961
- US-A- 4 671 379
- US-A- 4 858 718
- US-A- 5 109 946
- US-A- 5 268 537
- US-A- 5 510 582
- US-A1- 2005 115 718
- US-A1- 2007 104 030
- US-A1- 2007 250 269
- US-A1- 2011 107 830
- US-A1- 2014 332 199
- US-B2- 6 615 959

## Description

### FIELD OF THE INVENTION

The present invention relates generally to generation of seismic energy for the investigation of the earth in the vicinity of a wellbore. More particularly, but not by way of limitation, embodiments of the present invention use the fluid in the wellbore to couple seismic source energy to earth formations.

### BACKGROUND OF THE INVENTION

Several types of downhole seismic source acoustic energy generating systems have been utilized for inducing energy into the downhole environment, particularly into the borehole or wellbore wall. The data received from these sources is processed and analyzed to understand the lithology and subsurface environment the wellbores traverse. Typical downhole seismic energy sources include an explosive charge, air gun or some type of vibration inducing device. The approaches vary, but all are thought to have the potential to damage the wellbore. Explosive and air gun sources impact wellbores by point-source localized energy. Vibration sources are limited by the clamping area to the wellbore and are often observed to have poor energy coupling or transmission to the surrounding earth formation. Because many downhole seismic source methods have potential to damage the wellbore, low energy levels must be used and/or have poor coupling to the wellbore and surrounding earth formation, limiting useful seismic waves traveling away from the source. These drawbacks limit the usable or recoverable energy output from a downhole energy pulse or sweep as well as become problematic for source repeatability.

Patent publication US 4,671,379 discloses a method and apparatus for generating seismic waves in a borehole. The movement of a flexible diaphragm, located in the central portion of a tool collar in the borehole, is used to excite a fluid filled section of the borehole between first and second end means, in order to create a resonant standing pressure wave between said first and second end means.

### BRIEF SUMMARY OF THE DISCLOSURE

According to the invention, a method for imparting seismic energy with a downhole inertial mass seismic source within a wellbore is provided as defined in independent claim 1.

Advantageous aspects of the invention are defined in the dependent claims.

### BRIEF DESCRIPTION OF THE DRAWINGS

A more complete understanding of the present invention and benefits thereof may be acquired by referring to the follow description taken in conjunction with the accompanying drawings in which:
FIG. 1 is a schematic diagram of various aspects that may comprise one or more embodiments of a downhole inertial mass seismic source system;
FIG. 2 illustrates one or more embodiments illustrated in FIG. 1 relative to the wellbore;
FIG. 3 illustrates a Downhole Inertial Mass System deployed to provide seismic energy in the vicinity of a wellbore, which is not in accordance with the invention but included to assist understanding of the invention;
FIG. 4 illustrates still another Downhole Inertial Mass System which is not in accordance with the invention but included to assist understanding of the invention; and
Fig. 5 is a flow chart of an embodiment for deploying a Downhole Inertial Mass System in a wellbore.

While certain embodiments will be described in connection with the preferred illustrative embodiments shown herein, it will be understood that it is not intended to limit the invention to those embodiments. The scope of the present invention is defined by the appended claims. In the drawing figures, which are not to scale, the same reference numerals are used throughout the description and in the drawing figures for components and elements having the same structure, and primed reference numerals are used for components and elements having a similar function and construction to those components and elements having the same unprimed reference numerals.

### DETAILED DESCRIPTION

Turning now to the detailed description of the preferred arrangement or arrangements of the present invention, it should be understood that the inventive features and concepts may be manifested in other arrangements and that the scope of the invention is not limited to the embodiments described or illustrated. The scope of the invention is intended only to be limited by the scope of the claims that follow.

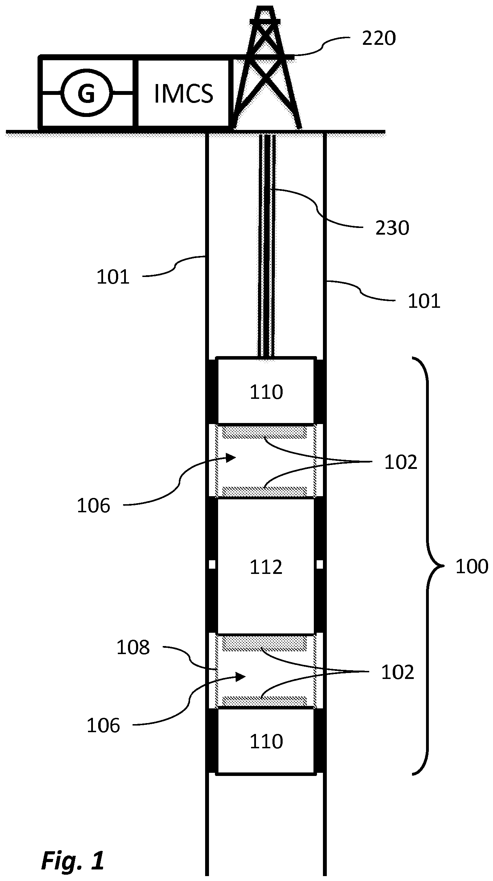

**FIG. 1** is a diagram illustrating an embodiment of a Downhole Inertial Mass System in a wellbore environment that comprises one or more apparatuses **100** deployed within wellbore casing **101** that include Fluid Plungers **102** (inertial masses) associated with Inertial Mass Apparatuses (**110** or **112**)**,** a control or operating system such as an Inertial Mass Control System **(IMCS)** and a power source, both located at or near the surface of the earth associated at surface facilities **220,** for example at the surface of earth and connected with downhole equipment by way of a wireline **230.** At least one embodiment is disclosed herein. Where numerical ranges or limitations are expressly stated, such express ranges or limitations may be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). The use of the term "about" means ±10% of the subsequent number, unless otherwise stated.

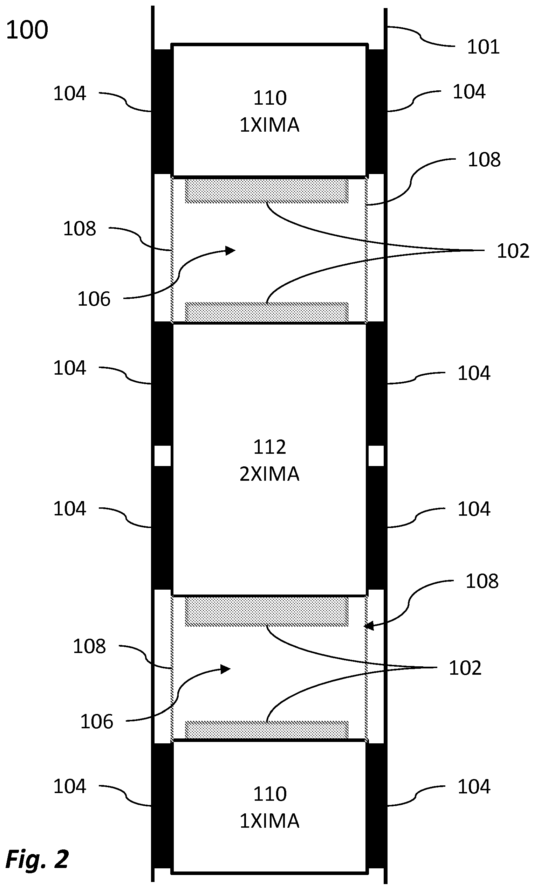

The present disclosure provides a type of wellbore-disposed seismic generation source capable of imparting high levels of seismic energy into the earth formation in the area of a wellbore. The present invention utilizes fluid in the wellbore as the coupling media and as the propagator of the compression wave energy. One embodiment comprising three associated apparatuses **100** of the present disclosure is more particularly illustrated in **FIG. 2****.** A compression wave is generated by the force of one or more fluid plungers **102** associated with an inertial mass apparatus (**110** or **112**) oscillating against one or more fluid column segments **106** (or fluid chambers) of trapped wellbore fluid media where the fluid does not readily move around the inertial mass apparatus (**110** or **112**) thus creating pressure in the fluid column segments **106.** One inertial mass apparatus (**110** or **112**) may be connected to another by cables **108** and each inertial mass apparatus anchored in the wellbore by side wall seals or claims **104.** At some point along the wellbore away from the inertial mass apparatus, the wellbore is closed by an end unit inertial mass apparatus **110** to trap fluid thus creating the chambers of fluid **106** that act as a waveguide environment for the pressure wave being created. By tuning the oscillation frequency of an inertial mass apparatus **110** or **112,** and depending on fluid column **106** length and oscillation frequency for the Fluid Plunger **102,** standing waves are created in the fluid.

By altering the oscillation frequency in a predetermined manner the peak compression of the standing wave energy can be oscillated thus creating a pulse. The pulse will be a high pressure point within the fluid that will induce deformation of the wellbore **100** surrounding the fluid column substantially over the length of the fluid chamber **106.** The energy transferred by the deformation of the surrounding wellbore will propagate into the surrounding earth formation as seismic signal.

Various nonlimiting embodiments disclosed herein comprise up to four, five or more apparatuses to make up embodiments of a Downhole Inertial Mass Seismic Source suitable for conducting subsurface investigations that may be implemented as a system or as a combination of apparatuses or as one or more methods, or methods of using apparatuses disclosed herein.

The use of a downhole inertial mass seismic source system providing fluid compression waves created by a Fluid-Plunger **102,** which is an oscillating inertial mass, while in a wellbore waveguide environment, overcomes problems related to wellbore damage caused by other downhole seismic sources and allows significant seismic energy transfer to the earth formation surrounding the wellbore. The fluid is coupled to the wellbore over an extended distance along the wellbore in a fluid filled segment **106,** or fluid chamber, while compression waves propagate within the fluid. The energy from the compression waves will be transferred to the wellbore **100** and be observed as shear wave energy if observed from the surface or as pressure waves from one wellbore to another wellbore.

The compression wave within the fluid chamber is created by the oscillation of a Fluid Plunger **102.** The Fluid Plunger **102** is a sliding mass that moves substantially parallel to and within the wellbore **100.** As illustrated in **FIG. 2** a first inertial mass apparatus 2XIMA **112** includes a Fluid Plunger **102** that is oscillated relative to a fixed position of the first inertial mass apparatus 2XIMA **112** within a wellbore. The fluid facing portions of the Fluid Plunger **102** are open to, and in contact with, a fluid chamber **106** on both ends of the first inertial mass apparatus 2XIMA **112.** The first inertial mass apparatus 2XIMA **112** includes a tube-like supporting super-structure smaller in diameter than the well bore with industry standard wellbore positional clamping capability and this apparatus oscillates the inertial mass (Fluid Plunger **102**) that is contained within the tube-like super-structure of the first inertial mass apparatus 2XIMA **112.** The inertial mass **102** may be oscillated within the superstructure of the inertial mass apparatus **112** to create pressure pulses out both ends of the first inertial mass apparatus 2XIMA **112** simultaneously, but the pulses from each end are opposite in polarity. The apparatus 2XIMA **112** may contain sensor devices for detecting the pressure fluctuations within the fluid column and contain the necessary electronics and power couplings to regulate the propulsion or oscillation dynamics of the Fluid Plunger **102** as required. The unit **112** is sealed relative to the wellbore inside surface to a substantial extent to restrict passage of fluid around the inertial mass apparatus **112.**

As also illustrated in **FIG. 2****,** a second inertial mass apparatus 1XIMA **110** is a unit that is open to fluid on one end so that the inertial mass **102** is in contact with fluid on only one end. The second inertial mass 1XIMA **110** includes this Fluid Plunger **102** that is oscillated relative to a fixed position of the second inertial mass 2XIMA **112** within a well bore. The second inertial mass apparatus 1XIMA **110** can be categorized as a tube-like structure smaller in diameter than the well bore with industry standard clamping capability and that oscillates the inertial mass **102** that is contained within the tube-like structure of the second inertial mass 1XIMA **110.** The inertial mass **102** is then oscillated within the tube superstructure of **110** to create pressure pulses into the fluid chamber **106.** The apparatus **110** contain may include transducers for detecting the pressure fluctuations within the fluid column and the necessary electronics and power couplings to regulate the propulsion or oscillation dynamics as required. The unit **110** is sealed relative to the well bore inside surface to a substantial extent to restrict passage of fluid around the inertial mass apparatus **110.** Support cables **108** may be provided to link inertial mass apparatuses.

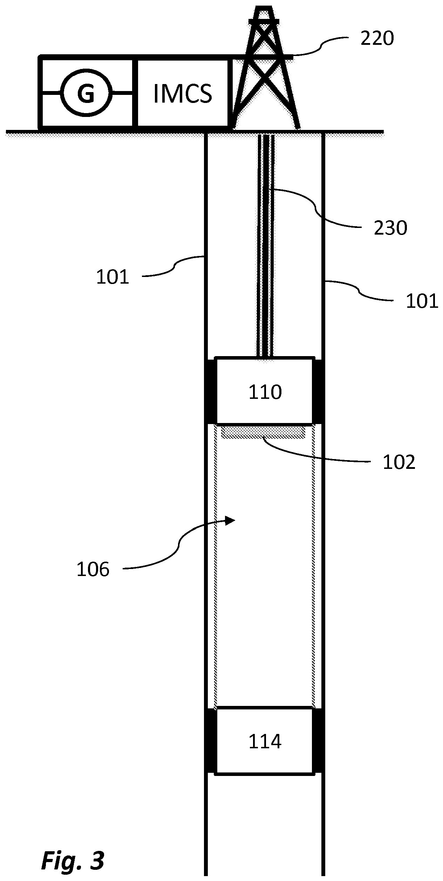

As illustrated in **FIG. 3****,** a third apparatus is described which is not in accordance with the invention but is included to assist understanding. The apparatus disclosed here includes a passive plug apparatus (PPA), **114** that may contain multiple sensors such as pressure transducers for detecting fluid pressure fluctuations, and may include transducers for detecting any other environmental vibrations. In one aspect, the terminus of a bore hole could serve the function of a PPA in combination with 1XIMA **110** and/or 2XIMA **112,** the PPA with or without sensors. So a 1XIMA **110** or a 2XIMA **112** could be used as a PPA with sensors. Again, support cables **108** may be provided to link inertial mass apparatuses together or with PPAs.

A fourth apparatus comprises an Inertial Mass Control System (IMCS) at surface facilities **220** that an operator can utilize to regulate the oscillation of the various inertial mass apparatuses. The control system would create feedback loops of information from the sensors on the inertial mass apparatuses so that the operator can program precise oscillation instructions to activate and control the inertial mass apparatuses (**110** and **112**) and assure that the desired dynamic response is achieved.

A fifth aspect of a Downhole Inertial Mass System includes a power system associated with the IMCS at **220** that provides the power for all the components of the Downhole Inertial Mass System that require power. The IMCS may control the power that goes to any inertial mass apparatus.

In one embodiment of the invention (see **FIG. 2**)**,** the system is configured so that a 1XIMA **110** is on the bottom (meaning furthest downhole) separated by some distance from a 2XIMA **112** that is separated by some distance from another 1XIMA **110** furthest up hole. The fluid contact openings (i.e., the plungers **102** in contact with the fluid chamber **106**) of the IXIMAs **110** face toward the 2XIMA **112** thus forming two segments of fluid to use as waveguides. The IMCS at **220** is on the surface and is programmed to oscillate one or both 1XIMA **110** and 2XIMA **112** in a manner to create pulses in both fluid filled segments **106.**

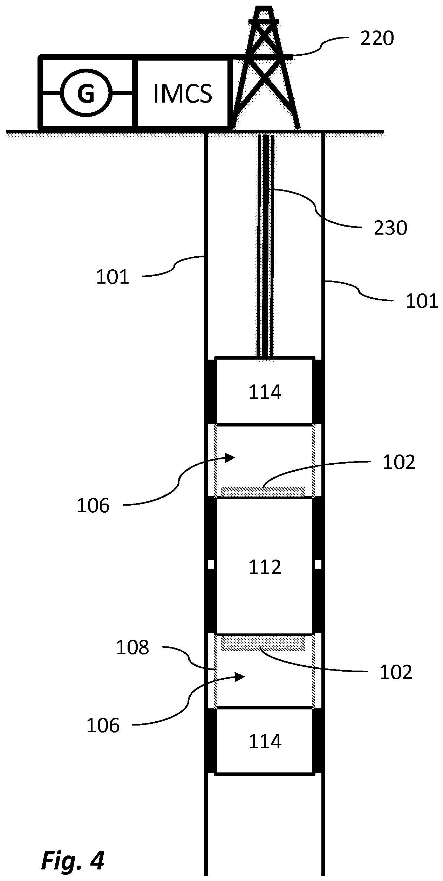

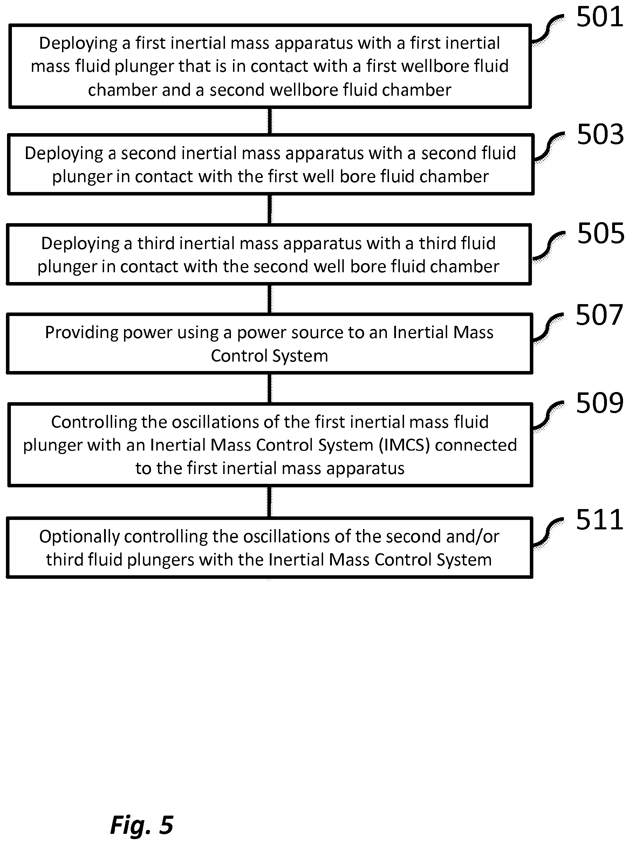

In a system not in accordance with the invention but included here to aid underdstanding, the system is configured so that a PPA is on bottom separated by some distance from a 1XIMA **110** (**FIG. 3**) or a 2XIMA **112** that is separated by some distance from a PPA **114** on top (**FIG. 4**). The IMCS with power supply at **220** is on the surface and is programmed to oscillate the 2XIMA **112** in a manner to create pulses from in both fluid chambers **106.** In yet another non-limiting embodiment a method for imparting seismic energy with a downhole inertial mass seismic-source within a wellbore, illustrated in **FIG. 5****,** comprises deploying a first inertial mass apparatus with a first inertial mass fluid plunger that is in contact with a first wellbore fluid chamber and a second wellbore fluid chamber **501,** deploying a second inertial mass apparatus with a fluid plunger in contact with the first well bore fluid chamber **503,** deploying a third inertial mass apparatus with a fluid plunger in contact with the second well bore fluid chamber **505,** providing power using a power source to an Inertial Mass Control System **507** and controlling the oscillations of the first inertial mass fluid plunger with an Inertial Mass Control System connected **509** to the first inertial mass apparatus. The oscillations of the second or third fluid plungers are controlled with the Inertial Mass Control System **511.**

Technical and economic advantages of various embodiments of the Downhole Inertial Mass System as disclosed provide for a downhole wellbore energy source that couples to the borehole and causes negligible or undetectable damage to the borehole while imparting a known controlled seismic signal that is sufficiently powerful for effective subsurface investigations.

Embodiments of the disclosed system use the fluid in the wellbore to couple seismic source energy to earth formations. The use of wave guide creates the pressure pulses that provide the seismic energy. This Downhole Inertial Mass System provides for higher quality data acquisition due to the higher energy level output than other seismic data utilizing a downhole seismic source. The Downhole Inertial Mass System works for borehole to borehole or borehole to surface. The Downhole Inertial Mass System as disclosed may be advantageously used in fracture detection for well analysis.

The downhole inertial mass seismic-source system for use within a wellbore to provide seismic signal energy at a wellbore location comprises a first inertial mass apparatus with a fluid plunger in contact with a first wellbore fluid chamber and a second wellbore fluid chamber along with a second inertial mass apparatus with a fluid plunger in contact with the first well bore fluid chamber. A third inertial mass apparatus with a fluid plunger is in contact with the second well bore fluid chamber. An Inertial Mass Control System (IMCS) is connected to the first inertial mass apparatus, while a power source provides power to the Inertial Mass Control System.

Other aspects include the Inertial Mass Control System may be connected to the second inertial mass apparatus or that the first inertial mass apparatus is lockable to a position within the wellbore. The IMCS may be programmed to oscillate the first inertial mass apparatus to create a pulse in two wellbore fluid chambers. The distance along the wellbore from the first inertial mass apparatus to the second inertial mass apparatus may be substantially similar to the distance between the first inertial mass apparatus to the third inertial mass apparatus. Support cables may be provided connecting the first inertial mass apparatus to the second inertial mass apparatus. In still other aspects the first inertial mass apparatus further comprises first and second fluid plungers, the first fluid plunger in contact with the first fluid chamber and the second fluid chamber in contact with the second fluid chamber. The first inertial mass apparatus may further comprise the combination of two inertial mass apparatuses with fluid plungers in contact with separate wellbore fluid chambers.

In other aspects the first inertial mass apparatus is lockable to a position within the wellbore or the IMCS is programmed to oscillate the first inertial mass apparatus to create pulses in two wellbore fluid chambers. In a system not in accordance with the invention but included here to aid understanding, the distance along the wellbore from the inertial mass apparatus to the first passive plug apparatus may be substantially similar to the distance between the first inertial mass apparatus and the second passive plug apparatus. Support cables may connect the first inertial mass apparatus to the first and second passive plug apparatuses. The first inertial mass apparatus may further comprise first and second fluid plungers with the first fluid plunger in contact with the first fluid chamber and the second fluid chamber in contact with the second fluid chamber. In another aspect the first inertial mass apparatus may further comprise the combination of two inertial mass apparatuses with fluid plungers in contact with separate wellbore fluid chambers.

In another system not in accordance with the invention but included here to aid understanding, a downhole inertial mass seismic-source system for use within a wellbore to provide seismic signal energy at a wellbore location comprises a first inertial mass apparatus with a fluid plunger in contact with a first wellbore fluid chamber, a second inertial mass apparatus with a fluid plunger in contact with the first well bore fluid chamber and an Inertial Mass Control System (IMCS) connected to the first inertial mass apparatus, and a power source providing power to the Inertial Mass Control System.

In other aspects, the Inertial Mass Control System is connected to the second inertial mass apparatus, first inertial mass apparatus may be lockable to a position within the wellbore and the IMCS may be programmed to oscillate the first inertial mass apparatus to create a pulse in the wellbore fluid chamber. In still another aspect, support cables may connect the first inertial mass apparatus to the second inertial mass apparatus.

Use of the term "optionally" with respect to any element of a claim means that the element is required, or alternatively, the element is not required, both alternatives being within the scope of the claim. Use of broader terms such as comprises, includes, and having may be understood to provide support for narrower terms such as consisting of, consisting essentially of, and comprised substantially of. Accordingly, the scope of protection is not limited by the description set out above but is defined by the claims that follow. Each and every claim is incorporated as further disclosure into the specification and the claims are embodiment(s) of the present disclosure.

While several embodiments have been provided in the present disclosure, it may be understood that the disclosed embodiments might be embodied in many other specific forms without departing from the scope of the present invention as defined by the appended claims. The present examples are to be considered as illustrative and not restrictive, and the intention is not to be limited to the details given herein. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and may be made without departing from the scope of the present invention as defined by the appended claims.

In closing, it should be noted that the discussion of any reference is not an admission that it is prior art to the present invention, especially any reference that may have a publication date after the priority date of this application. Although the systems and processes described herein have been described in detail, it should be understood that various changes, substitutions, and alterations can be made without departing from the scope of the invention as defined by the following claims. Those skilled in the art may be able to study the preferred embodiments and identify other ways to practice the invention that are not exactly as described herein. The scope of the present invention is defined by the appended claims.

## Claims

1. A method for imparting seismic energy with a downhole inertial mass seismic-source within a wellbore (101), the method comprising:
deploying a first inertial mass apparatus (112) with a first inertial mass fluid plunger (102) that is in contact with a first fluid filled segment (106) of the wellbore (101) and in contact with a second fluid filled segment (106) of the wellbore (101);
deploying a second inertial mass apparatus (110) with a second fluid plunger (102) in contact with the first fluid filled segment (106) of the wellbore (101);
deploying a third inertial mass apparatus (110) with a third fluid plunger (102) in contact with the second fluid filled segment (106) of the wellbore (101);
providing power using a power source (220) to an Inertial Mass Control System (IMCS); and
controlling the oscillations of the first inertial mass fluid plunger (102) and one or both of the second and third fluid plungers (102) with the Inertial Mass Control System (IMCS) in a manner to create pressure pulses in both fluid filled segments (106).

2. The method of claim 1, further comprising locking the first inertial mass apparatus (112) to a position within the wellbore (101).

3. The method of claim 1, wherein the IMCS is programmed to oscillate the first inertial mass apparatus (112) to create a pulse in two fluid filled segments (106) of the wellbore.

4. The method of claim 1, further comprising deploying the second inertial mass apparatus (110) a distance from the first inertial mass apparatus (112) that is substantially similar to the distance between the first inertial mass apparatus (112) to the third inertial mass apparatus (110).

5. The method of claim 1, further comprising attaching support cables connecting the first inertial mass apparatus (112) to the second inertial mass apparatus (110).

6. The method of claim 1 wherein the first inertial mass apparatus (112) further comprises first and second fluid plungers (102), the first fluid plunger (102) in contact with the first fluid filled segment (106) of the wellbore (101) and the second fluid plunger (102) in contact with the second fluid filled segment (106) of the wellbore (101).

7. The method of claim 1 wherein the first inertial mass apparatus (112) further comprises the combination of two inertial mass apparatuses with fluid plungers (102) in contact with separate fluid filled segments (106) of the wellbore (101).

## Patentansprüche

1. Verfahren zum Übertragen seismischer Energie mit einer seismischen Trägheitsmassequelle unter Tage, innerhalb eines Bohrlochs (101), wobei das Verfahren umfasst:
Einsetzen einer ersten Trägheitsmasseeinrichtung (112) mit einem ersten Trägheitsmassefluidkolben (102), der in Kontakt mit einem ersten fluidgefüllten Segment (106) des Bohrlochs (101) ist und in Kontakt mit einem zweiten fluidgefüllten Segment (106) des Bohrlochs (101) ist;
Einsetzen einer zweiten Trägheitsmasseeinrichtung (110) mit einem zweiten Fluidkolben (102) in Kontakt mit dem ersten fluidgefüllten Segment (106) des Bohrlochs (101);
Einsetzen einer dritten Trägheitsmasseeinrichtung (110) mit einem dritten Fluidkolben (102) in Kontakt mit dem zweiten fluidgefüllten Segment (106) des Bohrlochs (101);
Bereitstellen von Leistung unter Verwendung einer Leistungsquelle (220) an ein Trägheitsmassensteuerungssystem (IMCS); und
Steuern der Oszillationen des ersten Trägheitsmassefluidkolbens (102) und eines oder beider des zweiten und dritten Fluidkolbens (102) mit dem Trägheitsmassesteuerungssystem (IMSC) auf eine Weise, um Druckpulse in beiden fluidgefüllten Segmenten (106) zu erzeugen.

2. Verfahren nach Anspruch 1, weiter umfassend Verriegeln der ersten Trägheitsmasseeinrichtung (112) bei einer Position innerhalb des Bohrlochs (101).

3. Verfahren nach Anspruch 1, wobei das IMCS programmiert ist, die erste Trägheitsmasseeinrichtung (112) zu oszillieren, um einen Puls in zwei fluidgefüllten Segmenten (106) des Bohrlochs zu erzeugen.

4. Verfahren nach Anspruch 1, weiter umfassend Einsetzen der zweiten Trägheitsmasseeinrichtung (110) bei einem Abstand von der ersten Trägheitsmasseeinrichtung (112), der im Wesentlichen ähnlich dem Abstand zwischen der ersten Trägheitsmasseeinrichtung (112) zu der dritten Trägheitsmasseeinrichtung (110) ist.

5. Verfahren nach Anspruch 1, weiter umfassend Befestigen von Stützkabeln, die die erste Trägheitsmasseeinrichtung (112) mit der zweiten Trägheitsmasseeinrichtung (110) verbinden.

6. Verfahren nach Anspruch 1, wobei die erste Trägheitsmasseeinrichtung (112) weiter erste und zweite Fluidkolben (102) umfasst, der erste Fluidkolben (102) in Kontakt mit dem ersten fluidgefüllten Segment (106) des Bohrlochs (101) ist und der zweite Fluidkolben (102) in Kontakt mit dem zweiten fluidgefüllten Segment (106) des Bohrlochs (101) ist.

7. Verfahren nach Anspruch 1, wobei die erste Trägheitsmasseeinrichtung (112) weiter die Kombination von zwei Trägheitsmasseeinrichtungen mit Fluidkolben (102) in Kontakt mit separaten fluidgefüllten Segmenten (106) des Bohrlochs (101) umfasst.

## Revendications

1. Procédé pour communiquer de l'énergie sismique avec une source sismique de masse d'inertie de fond de trou à l'intérieur d'un puits de forage (101), le procédé comprenant les étapes consistant à :
déployer un premier appareil à masse d'inertie (112) avec un premier piston de fluide de masse d'inertie (102) qui est en contact avec un premier segment rempli de fluide (106) du puits de forage (101) et en contact avec un second segment rempli de fluide (106) du puits de forage (101) ;
déployer un deuxième appareil à masse d'inertie (110) avec un deuxième piston de fluide (102) en contact avec le premier segment rempli de fluide (106) du puits de forage (101) ;
déployer un troisième appareil à masse d'inertie (110) avec un troisième piston de fluide (102) en contact avec le second segment rempli de fluide (106) du puits de forage (101) ;
fournir de la puissance à l'aide d'une source d'alimentation (220) à un système de commande de masse d'inertie (IMCS) ; et
commander les oscillations du premier piston de fluide de masse d'inertie (102) et d'un des deuxième et troisième pistons de fluide (102) ou les deux avec le système de commande de masse d'inertie (IMCS) de manière à créer des impulsions de pression dans les deux segments remplis de fluide (106).

2. Procédé selon la revendication 1, comprenant en outre un verrouillage du premier appareil à masse d'inertie (112) dans une position à l'intérieur du puits de forage (101).

3. Procédé selon la revendication 1, dans lequel les IMCS sont programmés pour faire osciller le premier appareil à masse d'inertie (112) pour créer une impulsion dans deux segments remplis de fluide (106) du puits de forage.

4. Procédé selon la revendication 1, comprenant en outre un déploiement du deuxième appareil à masse d'inertie (110) à une distance du premier appareil à masse d'inertie (112) qui est sensiblement similaire à la distance entre le premier appareil à masse d'inertie (112) et le troisième appareil à masse d'inertie (110).

5. Procédé selon la revendication 1, comprenant en outre une fixation de câbles de support connectant le premier appareil à masse d'inertie (112) au deuxième appareil à masse d'inertie (110).

6. Procédé selon la revendication 1, dans lequel le premier appareil à masse d'inertie (112) comprend en outre des premier et deuxième pistons de fluide (102), le premier piston de fluide (102) en contact avec le premier segment rempli de fluide (106) du puits de forage (101) et le deuxième piston de fluide (102) en contact avec le second segment rempli de fluide (106) du puits de forage (101).

7. Procédé selon la revendication 1, dans lequel le premier appareil à masse d'inertie (112) comprend en outre la combinaison de deux appareils à masse d'inertie avec des pistons de fluide (102) en contact avec des segments remplis de fluide séparés (106) du puits de forage (101).
